# EUROPÄISCHE PATENTSCHRIFT

(11) **EP 3 807 552 B1**
(45) Veröffentlichungstag und Bekanntmachung des Hinweises auf die Patenterteilung: **01.06.2022**
(21) Anmeldenummer: 19735483.0
(22) Anmeldetag: 13.06.2019
(51) Int. Cl.: F16D 65/16

(54) **BREMSVORRICHTUNG**
BRAKE DEVICE
SYSTÈME DE FREINAGE

(30) Priorität: 14.06.2018 DE 102018114309
(43) Veröffentlichungstag der Anmeldung: 21.04.2021
(73) Patentinhaber: Physik Instrumente (PI) GmbH & Co. KG, 76228 Karlsruhe (DE)
(72) Erfinder: SANDER, Christian, 76307 Karlsbad (DE); MAHL, Philipp, 68753 Waghäusel (DE)
(74) Vertreter: LLR
(86) Internationale Anmeldenummer: PCT/DE2019/100542
(87) Internationale Veröffentlichungsnummer: WO 2019/238173

(56) Entgegenhaltungen:
- EP-A1- 3 078 557
- WO-A1-2009/095950
- JP-A- 2005 207 544

## Beschreibung

Die Erfindung betrifft eine Bremsvorrichtung gemäß den Ansprüchen 1 bis 8.

Aus der US 8 534 429 B2 ist ein Bremssystem für einen Schrittmotor bekannt, bei welchem an der Ausgangswelle des Schrittmotors eine Scheibe angebracht ist, mit welcher eine durch einen Piezoaktor angetriebene und eine Hebelübersetzung aufweisende Klemmvorrichtung in Kontakt bringbar ist, wobei durch besagten Kontakt zwischen der Klemmvorrichtung und der Scheibe aufgrund der resultierenden Reibung ein Bremsen bzw. Halten der Position des Schrittmotors erzielt werden kann. Der sich hieraus ergebende Vorteil ist, dass zum gewünschten Halten der Position des Schrittmotors dieser nicht weiter mit elektrischer Energie versorgt werden muss und eine deutliche Energieeinsparung erreicht wird.

Allerdings benötigt das außerhalb des Stellmotors befindliche externe Bremssystem ebenfalls Energie zur Aufrechterhaltung des Klemmkontakts bzw. der Klemmkraft. Mit anderen Worten ist es erforderlich, dass eine elektrische Spannung an dem Piezoaktor anliegt, solange durch das Bremssystem die Position des Schrittmotors gehalten werden soll. Auch hierdurch resultiert ein Energieverlust, der jedoch deutlich geringer ausfällt als bei der Versorgung des Schrittmotors mit elektrischer Energie zur Aufrechterhaltung einer gewünschten Position. Zudem wird das Bremssystem wirkungslos im Falle einer Unterbrechung der elektrischen Energiezufuhrt, beispielsweise im Falle eines Stromausfalls.

Aus der EP 3 078 557 A1 ist ein Bremssystem für einen Fahrzeug bekannt, welches ein Längenänderungselement aufweist, wobei die Verlängerung des Längenänderungselements durch einen Piezoaktor erzeugt wird.

Aus der WO 2009/095950 A1 ist eine Klemmvorrichtung bekannt, bei welcher elektrisch versorgten Piezoelementen eine Abklemmung erlauben.

Aus der JP 2005/207544 A ist ein Bremssystem für eine Welle bekannt, welches ein Lösen der Welle durch elektrisch versorgten Piezoelementen erlaubt.

Aus der DE 10 2012 107 362 A1 ist eine Bremsvorrichtung zum Abbremsen einer schienengeführten Transporteinrichtung und insbesondere eines Aufzugs bekannt, bei welcher zwei einen Bremsbelag aufweisende und über Festkörpergelenke schwenkbar gelagerte Bremshebel gegen eine zwischen diesen angeordnete Schiene gedrückt werden können. Ein Aktor in Form eines Elektromotors sorgt in einem Betriebsmodus dafür, dass die Bremshebel bzw. die Bremsbeläge von der

Schiene abgehoben sind und ein Lüftspiel resultiert. In diesem Betriebsmodus wird der Elektromotor mit einer gewissen Leistung betrieben, mit welcher dieser permanent gegen die Kraft einer Federanordnung, welche die Bremshebel aufeinander zu zieht, arbeitet, so dass die Bremsvorrichtung offen gehalten ist und eine reibungsfreie Bewegung der Schiene ermöglicht ist. Wird in einem anderen Betriebsmodus ein Bremsvorgang eingeleitet, wird die Motorleistung kontinuierlich reduziert, so dass die Kraft der Federanordnung dominanter wird und diese dafür sorgt, dass sich die gegenüberliegenden Bremshebel aufeinander zu bewegen und schließlich die Bremsbeläge in Reibkontakt mit der Schiene gelangen. Aufgrund der kontinuierlichen Absenkung der Motorleistung resultiert ein sanftes Anlegen der Bremsbeläge an die Schiene. Eine Notbremsung bei Stromausfall oder Defekt des Elektromotors ist mit einer solchen Bremsvorrichtung ebenso möglich, jedoch tritt hierbei die Bremswirkung schlagartig ein, da die Federkraft nach plötzlichem Wegfall der Motorkraft instantan einwirkt und die Bremshebel mit hoher Geschwindigkeit aufeinander zu drückt.

Nachteilig bei der aus der DE 10 2012 107 362 A1 bekannten Bremsvorrichtung ist der vergleichsweise große Bauraum, den diese einnimmt. Um eine gewünschte hohe Bremskraft zu erzielen, ist es notwendig, einerseits die Bremshebel mit einer großen Länge auszuführen, und andererseits auch die Bremsbeläge groß auszuführen, damit sich eine große Kontaktfläche zwischen diesen und der zu bremsenden Schiene ergibt. Hierbei ist es zusätzlich nachteilig, dass der Aktor und die Federanordnung vergleichsweise nahe an dem Drehpunkt der Bremshebel angeordnet sind, so dass zur Erzielung hoher Kräfte ein starker Elektromotor und eine hohe Kräfte erzeugende Federanordnung notwendig sind. Weiterhin nachteilig ist das unsymmetrische Einwirken der durch den Elektromotor und die Federanordnung generierten Kräfte, so dass es unter Umständen zu unsymmetrischer Krafteinleitung in die Bremshebel und somit zu unsymmetrischen Reibkräften zwischen den Bremsbelägen und der Schiene kommt, welche zu einem ungleichmäßigen Verschleiß der Bremsbeläge führen können, aber auch zu einer verminderten Bremsleistung.

Daher ist es Aufgabe der Erfindung, eine Bremsvorrichtung bereitzustellen, bei welcher trotz kompakter Abmessungen eine hohe und gleichmäßig bzw. symmetrisch verteilte Bremskraft realisierbar ist.

Diese Aufgabe wird gelöst durch eine Bremsvorrichtung nach Anspruch 1, wobei die sich daran anschließenden Unteransprüche 2 bis 8 mindestens zweckmäßige Weiterbildungen beschreiben.

Der im nachfolgenden Teil der Beschreibung gelegentlich verwendete Begriff ,im Wesentlichen' im Zusammenhang mit der Angabe von geometrischen Daten wie Winkeln, Dimensionen, Lagen, Orientierungen oder Richtungen ist so zu verstehen, dass die entsprechenden geometrischen Daten eine Abweichung von +/- 5% gegenüber dem jeweils angegebenen geometrischen Datum haben können, wobei diese Abweichung beispielsweise auf Fertigungs- oder Montagetoleranzen zurückzuführen ist.

Die erfindungsgemäße Bremsvorrichtung umfasst einen Rahmen, wenigstens ein Paar zueinander gegenüberliegend angeordneter Bremselemente, wenigstens ein mit dem jeweiligen Bremselement in Wirkverbindung stehendes Stellelement und eine Federeinrichtung. Jedes Bremselement weist drei aneinandergereihte und über Festkörpergelenke miteinander verbundene Gelenkabschnitte auf, wovon der mittlere Gelenkabschnitt einen Kontaktabschnitt aufweist und die beiden sich an den mittleren Gelenkabschnitt anschließenden Gelenkabschnitte jeweils über ein Festkörpergelenk einstückig mit dem Rahmen verbunden sind. Mittels der Federeinrichtung ist eine Kraft auf das jeweilige Bremselement ausgeübt, durch welche der jeweilige Kontaktabschnitt mit einer definierten Kraft gegen ein zwischen den Bremselementen gelegenes zu bremsendes Element drückbar ist.

Die Bremsvorrichtung ist derart ausgebildet, dass mittels eines kontinuierlichen Energieeintrags in die Stellelemente eine Kraft auf die Bremselemente erzeugbar ist, die der durch die Federeinrichtung auf die Bremselemente ausgeübten Kraft entgegenwirkt und vorzugsweise größer als die durch die Federeinrichtung auf das Bremselement ausgeübten Kraft ist, so dass diese vollständig aufhebbar bzw. kompensierbar ist.

Bei Wegfall des Energieeintrags in die Stellelemente ist die durch die Stellelemente auf die Bremselemente ausgeübte Kraft aufgehoben, so dass nur noch die durch die Federeinrichtung auf die Bremselemente ausgeübte Kraft wirkt. Diese drückt die Bremselemente bzw. deren Kontaktabschnitt mit einer hohen Kraft gleichmäßig von zwei gegenüberliegenden Seiten gegen ein zu bremsendes Element, und durch den Kontakt oder auch Eingriff der Bremselemente mit dem zu bremsenden Element wird erreicht, dass eine unbeabsichtigte Bewegung des zu bremsenden Elements verhindert ist bzw. eine etwaige Bewegung des zu bremsenden Elements gestoppt wird.

Aufgrund des spezifischen Aufbaus der Bremselemente resultieren bereits bei geringen Federkräften hohe Anpresskräfte der Kontaktabschnitte gegen das zu bremsende Element, und durch das Vorsehen von jedem Bremselement separat und in identischer Weise zugeordneten Stellelementen erfolgt eine symmetrische Kraftaufbringung, so dass insgesamt hohe und gleichmäßig bzw. symmetrisch verteilte Bremskräfte realisierbar sind.

Es kann von Vorteil sein, dass jedes der Stellelemente als ein piezoelekrischer Aktor ausgeführt ist, bei dem aufgrund eines elektrischen Energieeintrags eine Längenänderung und bevorzugt eine Längenzunahme hervorrufbar ist. Piezoelektrische Aktoren haben insbesondere den Vorteil, dass sie HV (Hoch-Vakuum)- bzw. sogar UHV (Ultra-Hoch-Vakuum)-kompatibel sind und keine magnetischen Eigenschaften aufweisen. Zudem zeichnen sich piezoelektrische Aktoren dadurch aus, dass sie beim Halten einer Position eine nur geringe Leistungsaufnahme aufweisen und die entsprechende Wärmeentwicklung ebenfalls gering ist. Daneben ist es selbstverständlich möglich, andere elektrisch angesteuerte Stellelemente, etwa Elektromotoren, zur Ausübung einer entsprechenden Kraft auf die Bremselemente zu verwenden. Elektromagnetisch, pneumatisch oder hydraulisch betriebene Stellelemente sind hierfür ebenso denkbar.

Weiterhin kann es von Vorteil sein, dass die Bremsvorrichtung eine Hebelübersetzungseinrichtung aufweist. Hierdurch lässt sich eine Übersetzung des gegebenenfalls nur geringen Stellwegs des Stellelements, der insbesondere bei Verwendung eines piezoelektrischen Stellelements gegeben ist, erzielen.

Zudem kann es von Vorteil sein, dass die Bremsvorrichtung wenigstens eine Tellerfeder, eine Zugfeder oder zumindest einen Zugfederabschnitt umfasst. Hierbei kann es vorteilhaft sein, dass die Richtung der Kraft der Tellerfeder oder der Zugfeder bzw. des Zugfederabschnitts im Wesentlichen senkrecht zu einem Bremselement oder im Wesentlichen parallel zu einem Bremselement gelegen ist. Durch die jeweilige Wirkrichtung der Kraft der Tellerfeder oder der Zugfeder bzw. des Zugfederabschnitts kann ein besonders günstiger Kraftfluss erzielt werden, der die Funktionssicherheit der Bremsvorrichtung erhöht. Bei Verwendung eines Pakets mit mehreren Tellerfedern kann bei geringem Baumaß eine sehr hohe Federkraft realisiert werden.

Ferner kann es von Vorteil sein, dass jedes der beiden Bremselemente eine langgestreckte Form aufweist, wobei die Stellelemente im Wesentlichen parallel zur Längserstreckung der Bremselemente angeordnet sind.

Darüber hinaus kann es vorteilhaft sein, dass die Federeinrichtung mehrere Zugfedern aufweist, die jeweils im Wesentlichen parallel zu einem Stellelement angeordnet sind.

Es kann sich als günstig erweisen, dass die Federeinrichtung zwei mit den Bremselementen verbundene Federelemente umfasst, und jedes der Federelemente zwei parallel zueinander angeordnete Zugfederabschnitte aufweist, wobei die Zugfederabschnitte im Wesentlichen senkrecht zu den Bremselementen angeordnet sind.

Die Erfindung betrifft ebenso eine Antriebseinheit mit einem zu bremsenden Element in Form eines Antriebselements und einer Bremsvorrichtung nach einem der vorhergehenden Ansprüche zum Zusammenwirken mit dem Antriebselement. Zudem betrifft die Erfindung eine Positioniervorrichtung mit wenigstens einer solchen Antriebseinheit.

Vorteile und Zweckmäßigkeiten der Erfindung werden deutlicher aus der nachfolgenden Beschreibung bevorzugter Ausführungsbespiele anhand der Figuren. Hierbei zeigen:
Figur 1: Perspektivische Darstellung einer Ausführungsform der erfindungsgemäßen Bremsvorrichtung
Figur 2: Draufsichtdarstellung der Bremsvorrichtung gemäß Figur 1
Figur 3: Schnittdarstellung der Bremsvorrichtung gemäß Figur 1 entlang des Schnitts gemäß Figur 2
Figur 4: Perspektivische Darstellung einer weiteren Ausführungsform der erfindungsgemäßen Bremsvorrichtung
Figur 5: Draufsichtdarstellung der Bremsvorrichtung gemäß Figur 4
Figur 6: Schnittdarstellung der Bremsvorrichtung gemäß Figur 4 entlang des Schnitts gemäß Figur 5
Figur 7: Perspektivische Darstellung einer weiteren Ausführungsform der erfindungsgemäßen Bremsvorrichtung
Figur 8: Draufsichtdarstellung der Bremsvorrichtung gemäß Figur 7
Figur 9: Schnittdarstellung der Bremsvorrichtung gemäß Figur 7 entlang des Schnitts gemäß Figur 8

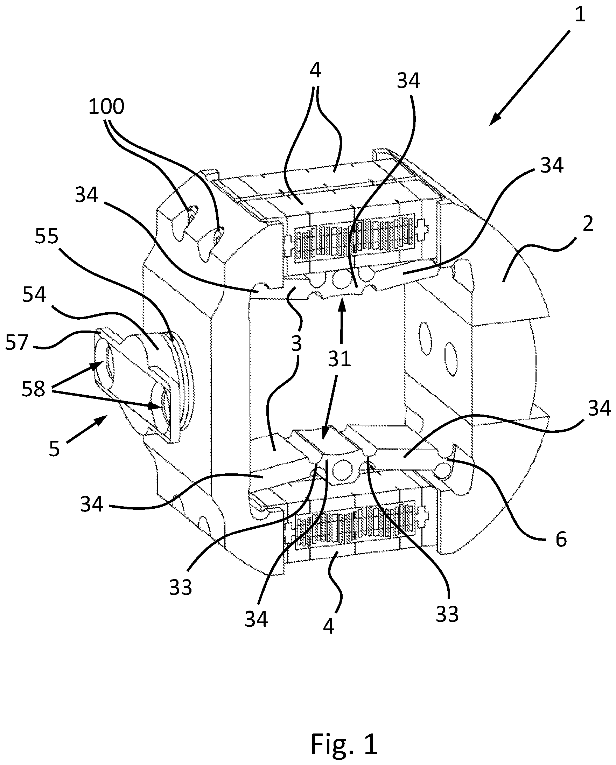

Figur 1 zeigt in einer perspektivischen Darstellung eine erste Ausführungsform einer erfindungsgemäßen Bremsvorrichtung 1. Diese Bremsvorrichtung weist zwei zueinander gegenüberliegend angeordnete Bremselemente 3 auf, wobei jedes der beiden Bremselemente 3 über zwei an unterschiedlichen Enden angeordnete Festkörpergelenke 6 einstückig mit dem Rahmen 2 verbunden ist.

Jedes Bremselement 3 besitzt eine langgestreckte Form und umfasst drei aneinandergereihte bzw. hintereinander angeordnete Gelenkabschnitte 34, wobei benachbarte Gelenkabschnitte 34 jeweils über ein Festkörpergelenk 33 miteinander verbunden sind. Der jeweils mittlere Gelenkabschnitt weist den zum Kontakt mit einem zu bremsenden Element vorgesehenen Kontaktabschnitt 31 auf. Die Kontaktabschnitte 31 der beiden Bremselemente 3 weisen in Richtungen aufeinander zu.

In den Rahmen 2 sind insgesamt vier Stellelemente 4 in Form von piezoelektrischen Aktoren eingesetzt. Jeweils zwei der Stellelemente 4 sind direkt nebeneinanderliegend und parallel zueinander angeordnet und wirken am jeweiligen endseitigen Abschnitt des Rahmens 2 auf diesen ein. Durch eine durch kontinuierlichen Energieeintrag bewirkte Längenänderung der Stellelemente 4 kommt es zu einer Verschiebung eines Elements des Rahmens relativ zu dem anderen und zur Befestigung an einer übergeordneten Einheit vorgesehenen Element des Rahmens 2 (in Figur 1 der rechte Teil des Rahmens 2). Aufgrund der beidseitigen Verbindung des Bremselements 3 mit dem Rahmen 2 bzw. den Elementen des Rahmens über Festkörpergelenke 6 kommt es zu einer gewünschten Bewegung des Bremselements 3, bei der sich der Gelenkabschnitt 34 mit dem Kontaktabschnitt 31 in Richtung auf die benachbarten und zugehörigen Stellelemente 4 zu bewegt. Das jeweils gegenüberliegend angeordnete Bremselement 3 macht eine analoge Bewegung, so dass sich bei kontinuierlichem Energieeintrag in die Stellelemente 4 und einhergehender Längenänderung der Stellelemente 4 die Gelenkabschnitte 34 mit dem Kontaktabschnitt 31 in entgegengesetzten Richtungen Richtung voneinander weg bewegen.

Jedes Stellelement 4 ist in Kontakt mit einer ihm zugeordneten Schraube 100, welche in eine entsprechende Gewindebohrung in dem Rahmen 2 eingesetzt ist, wobei mittels der jeweiligen Schraube 100 das damit in Kontakt stehende Stellelement 4 mit einer Druckkraft bzw. Vorspannung beaufschlagt werden kann.

An dem in Figur 1 linksseitigen Element des Rahmens 2 befindet sich die Federeinrichtung 5, die ein Spannelement 54 und ein Paket von Tellerfedern 55 umfasst. Das Spannelement 54 weist zudem einen in Figur 1 nicht erkennbaren Zapfen 56 und einen Kragenabschnitt 57 mit zwei Durchgangsbohrungen 58 auf. Der Zapfen 56 ragt in eine entsprechend geformte Ausnehmung des Rahmens 2, während sich die um den Zapfen 56 herum angeordneten Tellerfedern 55 zum einen an dem Rahmen 2 und zum Anderen an einem Absatzabschnitt des Spannelement 54 abstützen. Mittels in Figur 1 nicht gezeigter Schrauben, die durch die Durchgangsbohrungen 58 des Kragenabschnitts 57 des Spannelements 54 hindurchragen, erfolgt eine Verbindung des Spannelements 54 mit einer in Figur 1 ebenfalls nicht gezeigten Hülse 103 und durch diese Verbindung erfolgt zugleich ein Zusammendrücken der Tellerfedern 55, woraus eine Kraft resultiert, mit welcher die beiden Elemente des Rahmens 2 in einer Richtung aufeinander zu bewegbar sind. Somit wirkt die durch die Federeinrichtung 5 auf die Elemente des Rahmens 2 ausgeübte Kraft der durch die Stellelemente aufgrund einer Längenänderung hervorgerufenen Kraft auf die Elemente des Rahmens 2 entgegen. Die Richtung der Kraft der Federeinrichtung 5 ist dabei im Wesentlichen parallel zu der Ausrichtung der langgestreckten Bremselemente 3 angeordnet.

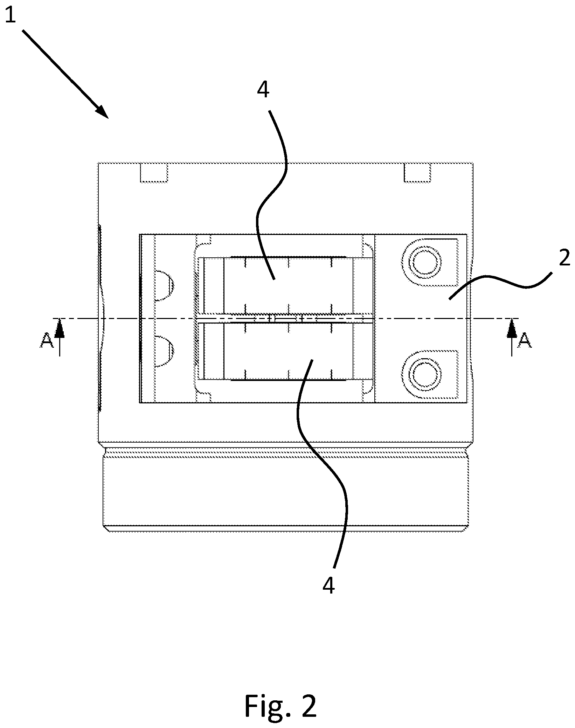

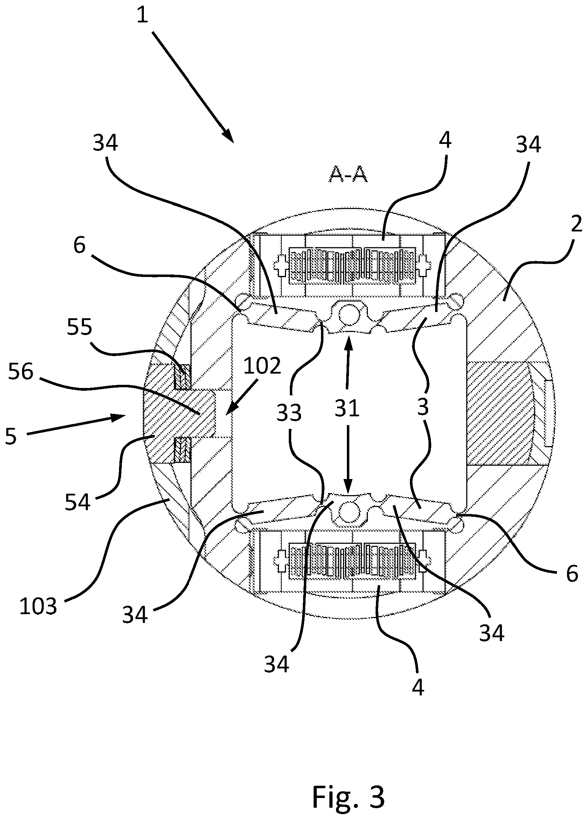

Figur 2 zeigt eine Draufsicht auf die Bremsvorrichtung gemäß Figur 1. Figur 2 kennzeichnet zudem einen Schnitt entlang der Schnittlinie A-A, wobei die entsprechende Schnittdarstellung in Figur 3 gezeigt ist.

Figur 3 zeigt die Federeinrichtung 5 mit dem Spannelement 54, dessen Zapfen 56 mit einer entsprechenden Ausnehmung 102 in dem Rahmen 2 bzw. in dem in Figur 3 linken Element des Rahmens 2 zusammenwirkt, wobei um den Zapfen 56 des Spannelements 54 das Paket aus mehreren Tellerfedern 55 angeordnet ist, welches sich gegen den Absatzabschnitt des Spannelements 54 abstützt. Über den Kragenabschnitt 57 des Spannelements 54, welcher zwei Durchgangsbohrungen 58 aufweist, ist das Spannelement 54 mittels in Figur 3 nicht dargestellten Schrauben, die durch die Durchgangsbohrungen des Kragenabschnitts 57 ragen, mit der Hülse 103 der Bremsvorrichtung 1 verbunden, wobei durch diese Verbindung die Tellerfedern 55 zusammengedrückt sind, um dadurch das in Figur 3 linke Element des Rahmens 2 in Richtung auf das in Figur 3 rechte Element des Rahmens 2 zu zu drücken.

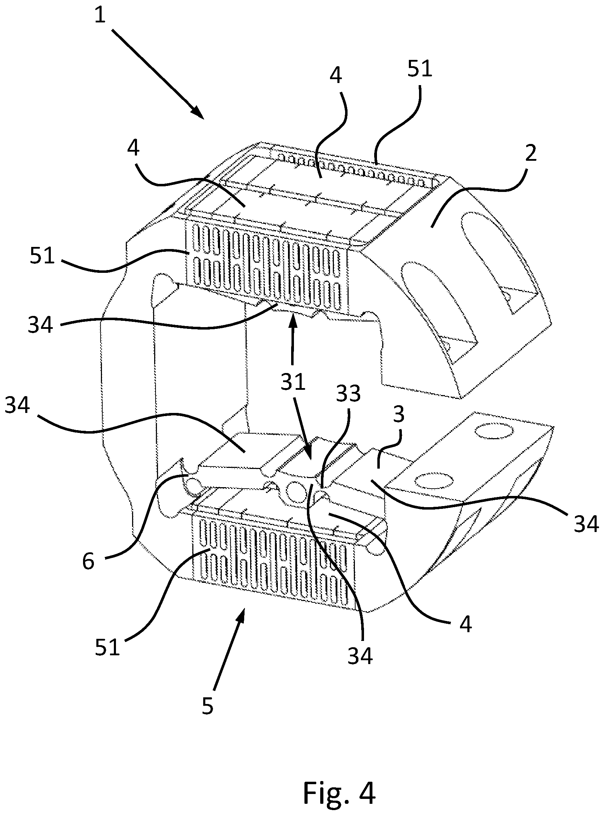

Figur 4 zeigt eine weitere Ausführungsform einer erfindungsgemäßen Bremsvorrichtung 1, die ähnlich der Ausführungsform gemäß den Figuren 1 bis 3 ist. Sie unterscheidet sich von dieser im Wesentlichen darin, dass die Federeinrichtung 5 andersartig aufgebaut ist und auch an anderer Stelle angeordnet ist. Die Federeinrichtung 5 umfasst insgesamt vier Zugfedern 51 in Form von flachen Federblechen, die jeweils neben einem Stellelement 4 und parallel zu diesem ausgerichtet angeordnet sind. Die Richtung der Kraft der Federeinrichtung 5 bzw. der Zugfedern 51 ist dabei im Wesentlichen parallel zu der Ausrichtung der langgestreckten Bremselemente 3 angeordnet.

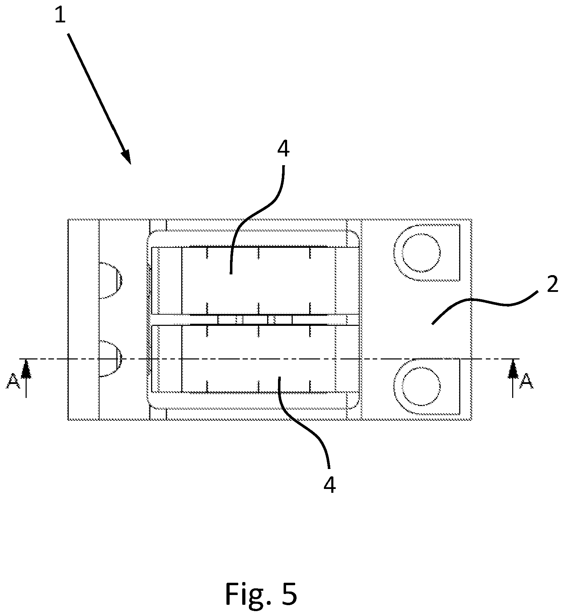

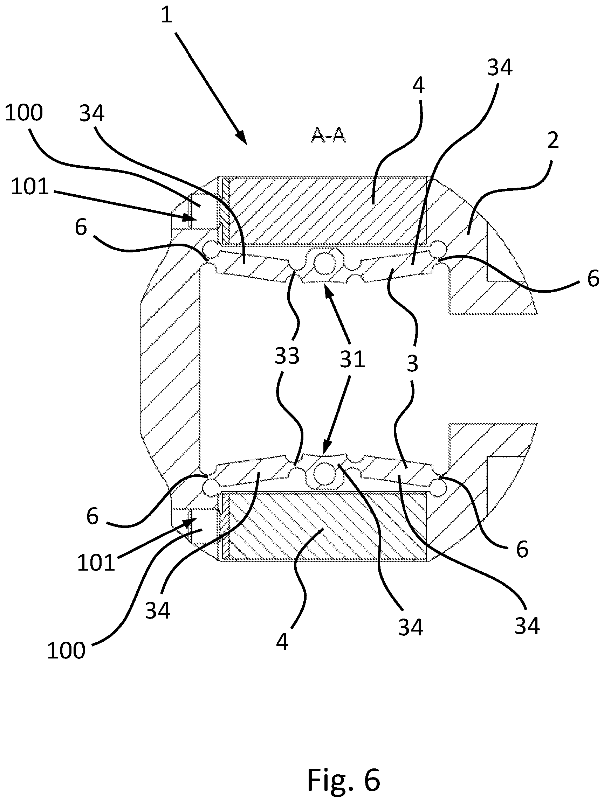

Figur 5 zeigt die Bremsvorrichtung 1 nach Figur 4 in einer Draufsicht, während Figur 6 einer Schnittdarstellung entlang des in Figur 5 gekennzeichneten Schnitts A-A entspricht.

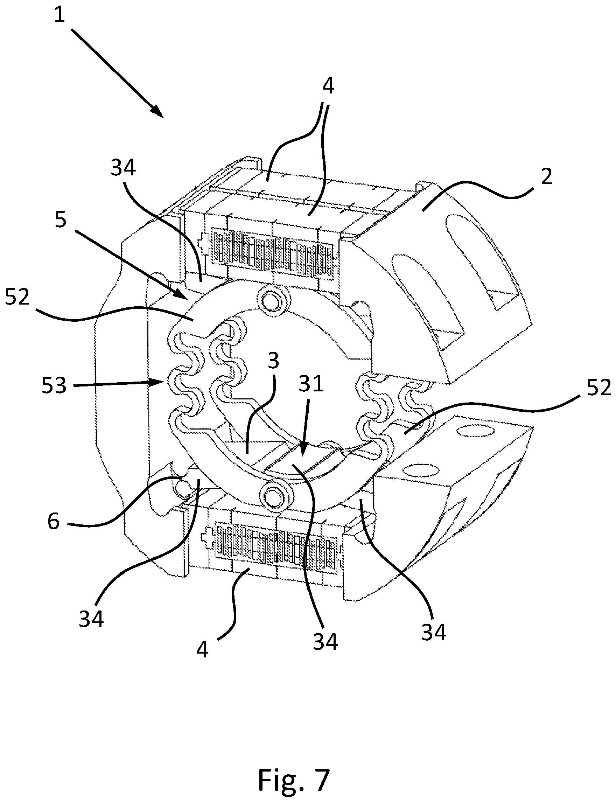

Bei der Bremsvorrichtung 1 gemäß Figur 7, die ebenfalls ähnlich zu der Bremsvorrichtung gemäß den Figuren 1 bis 3 bzw. zu der Bremsvorrichtung gemäß den Figuren 4 bis 6 ist, wird die Federeinrichtung 5 durch zwei im Wesentlichen ringförmige Federelemente 52 gebildet, welche jeweils zwei Zugfederabschnitte 53 aufweisen. Jedes der Federelemente 52 ist mit den den Kontaktabschnitt 31 aufweisenden Gelenkabschnitten 34 der beiden Bremselemente 3 verbunden. Die Richtung der Kraft der Federeinrichtung 5 ist dabei im Wesentlichen senkrecht zu der Ausrichtung der langgestreckten Bremselemente 3 angeordnet.

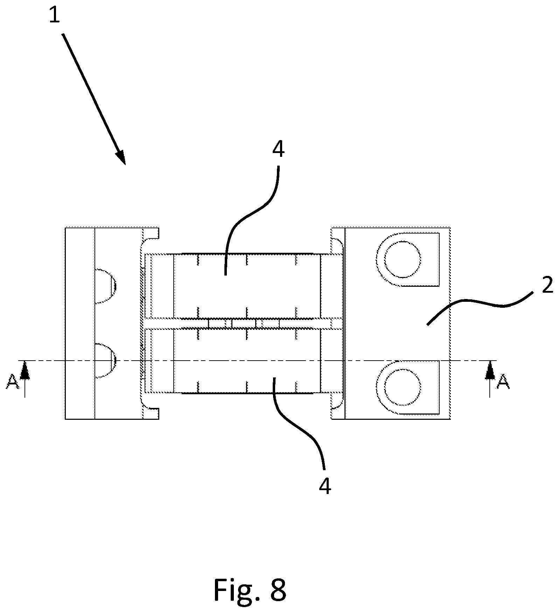

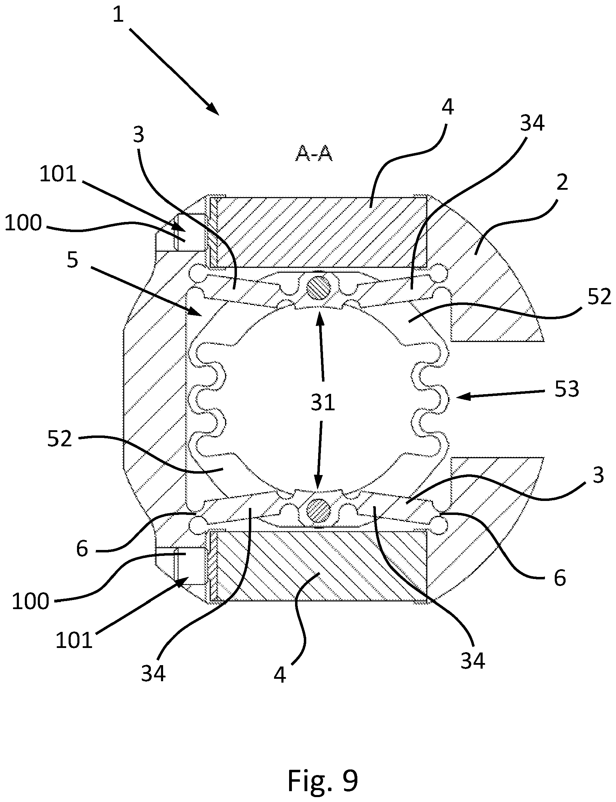

Figur 8 zeigt die Bremsvorrichtung gemäß Figur 7 in einer Draufsicht und kennzeichnet zugleich einen Schnitt entlang der Schnittlinie A-A, wobei die entsprechende Schnittdarstellung in Figur 9 gezeigt ist.

### Bezugszeichenliste

- 1: Bremsvorrichtung
- 2: Rahmen
- 3: Bremselement
- 31: Kontaktabschnitt (des Bremselements 3)
- 33: Festkörpergelenk (des Bremselements 3)
- 34: Gelenkabschnitte (des Bremselements 3)
- 4: Stellelement
- 5: Federeinrichtung
- 51: Zugfeder (der Federeinrichtung 5)
- 52: Federelement (der Federeinrichtung 5)
- 53: Zugfederabschnitt (des Federelements 52)
- 54: Spannelement (der Federeinrichtung 5)
- 55: Tellerfeder (der Federeinrichtung 5)
- 56: Zapfen (des Spannelements 54)
- 57: Kragenabschnitt (des Spannelements 54)
- 58: Durchgangsbohrungen (des Kragenabschnitts 57)
- 6: Festkörpergelenk
- 100: Schraube
- 101: Gewindebohrung
- 102: Ausnehmung (des Rahmens 2)
- 103: Hülse (der Bremsvorrichtung 1)

## Patentansprüche

1. Bremsvorrichtung (1), umfassend einen Rahmen (2), wenigstens ein Paar zueinander gegenüberliegend angeordneter Bremselemente (3), wenigstens ein mit dem jeweiligen Bremselement (3) in Wirkverbindung stehendes Stellelement (4) und eine Federeinrichtung (5), wobei jedes Bremselement (3) drei aneinandergereihte und über Festkörpergelenke (33) miteinander verbundene Gelenkabschnitte (34) aufweist, wovon der mittlere Gelenkabschnitt (34) einen Kontaktabschnitt (31) aufweist und die beiden sich an den mittleren Gelenkabschnitt anschließenden Gelenkabschnitte jeweils über ein Festkörpergelenk (6) einstückig mit dem Rahmen (2) verbunden sind, **dadurch gekennzeichnet, dass** mittels der Federeinrichtung (5) eine Kraft auf das jeweilige Bremselement (3) ausgeübt ist, durch welche der jeweilige Kontaktabschnitt (31) mit einer definierten Kraft gegen ein zwischen den Bremselementen gelegenes zu bremsendes Element drückbar ist, und die Bremsvorrichtung (1) derart ausgebildet ist, dass mittels eines kontinuierlichen Energieeintrags in die Stellelemente (4) eine Kraft auf die Bremselemente (3) erzeugbar ist, die der durch die Federeinrichtung (5) auf die Bremselemente (3) ausgeübten Kraft entgegenwirkt, und bei Wegfall des Energieeintrags in die Stellelemente (4) die durch diese auf die Bremselemente (3) ausgeübte Kraft aufgehoben ist.

2. Bremsvorrichtung nach Anspruch 1, **dadurch gekennzeichnet, dass** jedes Stellelement (4) ein piezoelekrischer Aktor ist, bei dem aufgrund eines elektrischen Energieeintrags eine Längenänderung hervorrufbar ist.

3. Bremsvorrichtung nach Anspruch 1 oder 2, **dadurch gekennzeichnet, dass** diese eine Hebelübersetzungseinrichtung aufweist.

4. Bremsvorrichtung nach einem der vorhergehenden Ansprüche, **dadurch gekennzeichnet, dass** die Federeinrichtung (5) wenigstens eine Tellerfeder (55), eine Zugfeder (51) oder zumindest einen Zugfederabschnitt (53) umfasst.

5. Bremsvorrichtung nach Anspruch 4, **dadurch gekennzeichnet, dass** die Richtung der Kraft der Tellerfeder (55), der Zugfeder (51) oder des Zugfederabschnitts (53) im Wesentlichen senkrecht zu einem Bremselement (3) oder im Wesentlichen parallel zu einem Bremselement (3) gelegen ist.

6. Bremsvorrichtung nach einem der vorhergehenden Ansprüche, **dadurch gekennzeichnet, dass** jedes der beiden Bremselemente (3) eine langgestreckte Form aufweist, wobei die Stellelemente (4) im Wesentlichen parallel zur Längserstreckung der Bremselemente (3) angeordnet sind.

7. Bremsvorrichtung nach einem der vorhergehenden Ansprüche, **dadurch gekennzeichnet, dass** die Federeinrichtung (5) mehrere Zugfedern (51) aufweist, die jeweils im Wesentlichen parallel zu einem Stellelement (4) angeordnet sind.

8. Bremsvorrichtung nach einem der Ansprüche 1 bis 6, **dadurch gekennzeichnet, dass** die Federeinrichtung (5) zwei mit den Bremselementen (3) verbundene Federelemente (52) umfasst, und jedes der Federelemente (52) zwei parallel zueinander angeordnete Zugfederabschnitte (53) aufweist, wobei die Zugfederabschnitte (53) im Wesentlichen senkrecht zu den Bremselementen (3) angeordnet sind.

9. Antriebseinheit mit einem zu bremsenden Antriebselement und einer Bremsvorrichtung nach einem der vorhergehenden Ansprüche zum Zusammenwirken mit dem Antriebselement.

10. Positioniervorrichtung mit wenigstens einer Antriebseinheit nach Anspruch 9.

## Claims

1. A Brake device (1), comprising a frame (2), at least one pair of braking elements (3) arranged opposite one another, at least one actuating element (4) operatively connected to the respective braking element (3), and a spring device (5), each braking element (3) having three joint sections (34) arranged in a row and connected to one another by means of solid-state joints (33) of which the middle joint section (34) has a contact section (31) and the two joint sections adjoining the middle joint section are each connected in one piece to the frame (2) via a solid-state joint (6), **characterized in that** a force is exerted on the respective braking element (3) by means of the spring device (5), by means of which force the respective contact section (31) can be pressed with a defined force against an element to be braked which is located between the braking elements, and the brake device (1) is designed in such a way that by means of a continuous energy input into the actuating elements (4) a force can be generated on the braking elements (3) which counteracts the force exerted by the spring device (5) on the braking elements (3), and when the energy input into the actuating elements (4) ceases the force exerted by the latter on the braking elements (3) is cancelled.

2. The brake device according to claim 1, **characterized in that** each actuating element (4) is a piezoelectric actuator in which a change in length can be caused due to an electrical energy input..

3. The brake device according to claim 1 or 2, **characterized in that** it comprises a lever transmission device.

4. The brake device according to one of the preceding claims, **characterized in that** the spring device (5) comprises at least one cup spring (55), a tension spring (51) or at least one tension spring section (53).

5. The brake device according to claim 4, **characterized in that** the direction of the force of the cup spring (55), the tension spring (51) or the tension spring section (53) is located substantially perpendicular to a braking element (3) or substantially parallel to a braking element (3).

6. The brake device according to one of the preceding claims, **characterized in that** each of the two braking elements (3) has an elongated shape, the actuating elements (4) being arranged substantially parallel to the longitudinal extension of the braking elements (3).

7. The brake device according to any one of the preceding claims, **characterized in that** the spring device (5) comprises a plurality of tension springs (51) each arranged substantially parallel to an actuating element (4).

8. The brake device according to any one of claims 1 to 6, **characterized in that** the spring device (5) comprises two spring elements (52) connected to the braking elements (3), and each of the spring elements (52) has two tension spring sections (53) arranged parallel to each other, the tension spring sections (53) being arranged substantially perpendicular to the braking elements (3).

9. A drive unit comprising a drive element to be braked and a braking device according to any one of the preceding claims for cooperating with the drive element.

10. A positioning device with at least one drive unit according to claim 9.

## Revendications

1. Dispositif de freinage (1), comprenant une armature (2), au moins une paire d'éléments de freinage (3) agencés l'un en face de l'autre, au moins un élément d'actionnement (4) en liaison active avec l'élément de freinage (3) respectif, et un dispositif à ressort (5), dans lequel chaque élément de freinage (3) comporte trois parties à joint articulé (34) placées les unes à la suite des autres et reliées les unes aux autres par des joints articulés fixes (33), la partie à joint articulé centrale (34) comportant une partie de contact (31) et les deux parties à joint articulé adjacentes à la partie à joint articulé centrale étant respectivement reliées d'un seul tenant à l'armature (2) par l'intermédiaire d'un joint articulé fixe (6), **caractérisé en ce que** le dispositif à ressort (5) permet d'exercer une force sur l'élément de freinage (3) respectif, au moyen de laquelle la partie de contact (31) respective peut être pressée avec une force définie contre un élément à freiner situé entre les éléments de freinage, et le dispositif de freinage (1) est conçu de telle sorte qu'un apport d'énergie continu dans les éléments d'actionnement (4) permet de générer une force sur les éléments de freinage (3) qui contrecarre la force exercée par le dispositif à ressort (5) sur les éléments de freinage (3) et, en cas d'arrêt de l'apport d'énergie dans les éléments d'actionnement (4), la force que ceux-ci exercent sur les éléments de freinage (3) est supprimée.

2. Dispositif de freinage selon la revendication 1, **caractérisé en ce que** chaque élément d'actionnement (4) est un actionneur piézoélectrique, dans lequel une variation de longueur peut être créée par un apport d'énergie électrique.

3. Dispositif de freinage selon la revendication 1 ou 2, **caractérisé en ce que** ce dispositif comporte un dispositif de transmission à levier.

4. Dispositif de freinage selon l'une des revendications précédentes, **caractérisé en ce que** le dispositif à ressort (5) comprend au moins une rondelle-ressort (55), un ressort de traction (51) ou au moins une partie de ressort de traction (53).

5. Dispositif de freinage selon la revendication 4, **caractérisé en ce que** la direction de la force de la rondelle-ressort (55), du ressort de traction (51) ou de la partie de ressort de traction (53) est sensiblement perpendiculaire à un élément de freinage (3) ou sensiblement parallèle à un élément de freinage (3).

6. Dispositif de freinage selon l'une des revendications précédentes, **caractérisé en ce que** chacun des deux éléments de freinage (3) a une forme allongée, dans lequel les éléments d'actionnement (4) sont agencés de manière sensiblement parallèle à l'extension longitudinale des éléments de freinage (3).

7. Dispositif de freinage selon l'une des revendications précédentes, **caractérisé en ce que** le dispositif à ressort (5) comporte plusieurs ressorts de traction (51) qui sont respectivement agencés de manière sensiblement parallèle à un élément d'actionnement (4).

8. Dispositif de freinage selon l'une des revendications 1 à 6, **caractérisé en ce que** le dispositif à ressort (5) comprend deux éléments à ressort (52) reliés aux éléments de freinage (3), et chacun des éléments à ressort (52) comporte deux parties de ressort de traction (53) agencées parallèlement l'une à l'autre, dans lequel les parties de ressort de traction (53) sont agencées de manière sensiblement perpendiculaire aux éléments de freinage (3).

9. Unité d'entraînement comportant un élément d'entraînement à freiner et un dispositif de freinage selon l'une des revendications précédentes pour coopérer avec l'élément d'entraînement.

10. Dispositif de positionnement comportant au moins une unité d'entraînement selon la revendication 9.
